# EUROPEAN PATENT APPLICATION

(11) **EP 2 837 835 A1**
(43) Date of publication of application: **18.02.2015**
(21) Application number: 14178115.3
(22) Date of filing: 23.07.2014
(51) Int. Cl.: F16B 5/04, F16B 41/00, F16B 5/02

(54) **Attachment device for non-permanently attaching a child component to a parent component**

(30) Priority: 06.08.2013 GB 201314061
(71) Applicant: Rolls-Royce plc, London SW1E 6AT (GB)
(72) Inventor: Swan, Daniel, Derby, Derbyshire DE72 2BA (GB); Care, Ian, Derby, Derbyshire DE23 6EU (GB)
(74) Representative: Vaughan, Sarah Elizabeth

(57) **Abstract**

An attachment device (30) for non-permanently attaching a child component (60) to a parent component (50). The attachment device has a first elongate element for non-permanently attaching the child component to the parent component; a second elongate element; a holder. The holder (40) is configured to rest against an installation surface of the parent component whilst holding the first (32) and second elongate elements (34) in position relative to the installation surface of the parent component such that: the first elongate element (32) extends, from a first position on the installation surface of the parent component, entirely through the parent component and at least partially through the child component in a manner that permits the first elongate element to be used to non-permanently attach the child component to the parent component; the second elongate element (34) extends, from a second position on the installation surface of the parent component that is different from the first position on the installation surface of the parent component, at least partially through the parent component.

## Description

### Field of the Invention

The present invention relates to an attachment device for non-permanently attaching a child component to a parent component.

### Background of the Invention

An example of an attachment device used to non-permanently attach a child component to a parent component is a stud. For the purposes of this disclosure, a stud may be defined as an elongate fastener that may include, for example, a screw thread along at least a portion of its length or a recess configured to take a circlip or lock pin.

A stud may be used to non-permanently attach a child component to a parent component in instances where a nut and bolt is not practical, e.g. where access to one side of a parent component is restricted.

In the field of gas turbine engines, a stud for non-permanently attaching a child component to a parent component is usually provided in one of two arrangements:
- the stud is permanently attached to the parent component (e.g. by welding, by co-moulding, or by being integrally formed with the holder)
- the stud is non-permanently attachable to the parent component (in which case the stud may be referred to as being "spareable")

A disadvantage of a stud that is permanently attached to the parent component (e.g. by welding, by co-moulding, or by being integrally formed with the holder) is that this arrangement can be difficult to repair, e.g. if a screw thread included on the stud becomes damaged.

In the case that the stud is "spareable", the parent component usually includes an internal screw thread to allow the stud to be non-permanently attached to the parent component. For example, a "spareable" stud may have a first screw thread along a first portion of its length and a second screw thread along a second portion of its length, wherein the first screw thread is configured to engage with a corresponding internal screw thread in the parent component (i.e. to non-permanently attach the stud to the parent component) and the second screw thread is configured to engage with a corresponding internal screw thread in the child component (i.e. to non-permanently attach the stud to the child component).

An example disadvantage of a stud that is "spareable" is that the internal screw thread in the parent component may become damaged, e.g. during replacement of the stud or through corrosion, thus potentially compromising the attachment between the parent component and the child component. Also, a "spareable" stud may suffer from wind out (i.e. unscrew itself from the parent component) during fitment/replacement of the child component. This can be particularly problematic if it is desired to attach/detach the child component to/from the parent component on a regular basis.

By way of example, an internal screw thread in the parent component may be provided by a helicoil (RTM) to provide a "spareable" stud arrangement.

Some studs include a "keying" or "self-locking" feature that can prevent the stud from suffering from wind out during fitment/replacement of the child component by preventing rotation of the stud relative to the parent component.

The present invention has been devised in light of the above considerations.

### Summary of the Invention

A first aspect of the invention may provide:
An attachment device for non-permanently attaching a child component to a parent component, the attachment device having:
   a first elongate element for non-permanently attaching the child component to the parent component;
   a second elongate element;
   a holder configured to rest against an installation surface of the parent component whilst holding the first and second elongate elements in position relative to the installation surface of the parent component such that:
      the first elongate element extends, from a first position on the installation surface of the parent component, entirely through the parent component and at least partially through the child component in a manner that permits the first elongate element to be used to non-permanently attach the child component to the parent component;
      the second elongate element extends, from a second position on the installation surface of the parent component that is different from the first position on the installation surface of the parent component, at least partially through the parent component.

An advantage of this arrangement is that the holder and/or the second elongate element may act as a load spreader, e.g. to improve resistance to bending loads between the first elongate element and the parent component. Further, the second elongate element may inhibit rotation of the parent component relative to the attachment device. Further, the holder may protect the parent component.

For the purposes of this disclosure, the terms "non-permanent" and "non-permanently" in the context of describing an attachment between a first element (e.g. a child component) and a second element (e.g. a parent component) means that the first element and the second element are attached in a reversible manner, i.e. in a manner that allows the first element and second elements to be subsequently detached from, and re-attached to, each other without causing significant damage to the means used to attach the first and second elements together, e.g. such that lengthy processing (such as welding in a new part) to permit re-attachment of the first and second elements is not required. Thus, for the purposes of this disclosure, welding or co-moulding first and second elements together, or forming the first and second elements integrally together, may be considered as providing a "permanent" attachment between the first and second elements, whereas attaching first and second elements by means of a screw thread or split pin may be viewed as providing "non-permanent" attachment between the first and second elements. The terms "non-permanent" and "non-permanently" may be used interchangeably with the terms "reversible" and "reversibly" herein.

In exemplary embodiments, the second elongate element is for attaching the holder to the parent component, e.g. so as to retain the holder in a position in which it rests against the installation surface of the parent component.

In this way, the holder can be retained in position on the installation surface of the parent component regardless of whether the first elongate element is being used to attach a child component to the parent component.

The second element may be for permanently or non-permanently attaching the holder to the parent component, depending on application requirements.

In exemplary embodiments, the first elongate element is configured (e.g. sized) so as not to lockingly engage with (e.g. by interlocking with or friction fitting with) the parent component when it extends through the parent component. This helps to reduce the risk of the parent component sustaining damage, e.g. if the attachment device is repeatedly used to attach/detach the child component to/from the parent component.

In exemplary embodiments, the first elongate element includes a screw thread along at least a portion of its length (in which case the first elongate element may be viewed as a "stud").

The holder may be a plate.

In exemplary embodiments, the first elongate element is permanently attached to the holder (e.g. by welding, by co-moulding, or by being integrally formed with the holder).

In exemplary embodiments, the second elongate element is provided as a component that is separate from the holder. The second elongate element may be used to permanently or non-permanently attach the holder to the parent component, depending on application requirements.

By way of example, the second elongate element could be a rivet. The second elongate element may include a screw thread along at least a portion of its length (in which case the second elongate element may be viewed as a "stud").

In exemplary embodiments, the second elongate element and/or the holder is/are configured to be weaker than the parent component such that, under a predetermined load between the parent component and the attachment device, the second elongate element and/or the holder break (e.g. shear off) before permanent deformation of the parent component occurs.

In this way, damage of the parent component can be avoided in cases where there is an excessive load between the parent component and the attachment device.

The attachment device may include a plurality of the first elongate elements.

The attachment device may include a plurality of the second elongate elements.

The holder could be configured to hold the first elongate element in a manner that allows the first elongate element to move (e.g. "float"), for example in a lateral direction, relative to the holder, e.g. to allow for positional tolerances when using the attachment device or to allow for tolerances between multiple first elongate element(s). To achieve this configuration, the holder, the parent component 50 and the child component may have clearance holes which are large enough to allow the first elongate element to move laterally relative to the holder.

A second aspect of the invention relates to an apparatus in which an attachment device as set out in the first aspect of the invention is used to non-permanently attach a child component to a parent component.

A second aspect of the invention may provide:
An apparatus that includes:
   a parent component;
   a child component;
   an attachment device as set out in the first aspect of the invention;
   wherein the holder rests against an installation surface of the parent component whilst holding the first and second elongate elements in position relative to the installation surface of the parent component such that:
      the first elongate element extends, from a first position on the installation surface of the parent component, entirely through the parent component and at least partially through the child component;
      the second elongate element extends, from a second position on the installation surface of the parent component that is different from the first position on the installation surface of the parent component, at least partially through the parent component;
   wherein the first elongate element is used to non-permanently attach the child component to the parent component.

By way of example, the first elongate element may be used to non-permanently attach the child component to the parent component by means of a nut or by means of an internal screw thread in the child component. However, other forms of non-permanent attachment would equally be possible, as described in more detail below.

In exemplary embodiments, the parent component includes a hole for the first elongate element at the first position on the installation surface of the parent component. In exemplary embodiments, the hole at the first position on the installation surface of the parent component extends entirely through the parent component. In exemplary embodiments, the hole at the first position on the installation surface of the parent component does not include an internal screw thread, so as to avoid the first elongate element lockingly engaging with the parent component when the first elongate element extends through the parent component.

In exemplary embodiments, the child component includes a hole for the first elongate element, which may extend partially or entirely through the child component.

In exemplary embodiments, the parent component includes a hole for the second elongate element at the second position on the installation surface of the parent component. The hole at the second position on the installation surface of the parent component may extend partially through the parent component or entirely through the parent component, depending on application requirements.

The apparatus may include a plurality of attachment devices as set out in the first aspect of the invention, the first elongate element of each attachment device may be used to non-permanently attach a respective child component to the parent component.

The apparatus may be a gas turbine engine or an arrangement of components for use in a gas turbine engine.

Accordingly, the parent component may be a casing for use in a gas turbine engine and the/each child component could be an accessory for use in a gas turbine engine. The/each accessory may be a component that is intended to be attached to the parent component temporarily. For example, the/each child component may be a pump, a pipework element, a motor, a valve, a bracket or a lifting fixture.

A third aspect of the invention may provide:
A method of using an attachment device as set out in the first aspect of the invention, the method including:
   resting the holder against an installation surface of a parent component such that:
      the first elongate element extends, from a first position on the installation surface of the parent component, entirely through the parent component and at least partially through the child component;
      the second elongate element extends, from a second position on the installation surface of the parent component that is different from the first position on the installation surface of the parent component, at least partially through the parent component; and
   using the first elongate element to non-permanently attach the child component to the parent component.

In exemplary embodiments, the method includes detaching the child component from the parent component, e.g. without damaging the parent or child components.

The method may include using the second elongate element to attach the holder to the parent component. In exemplary embodiments, the second elongate element is used to attach the holder to the parent component before the first elongate element is used to non-permanently attach the child component to the parent component.

As noted previously, the attachment of the holder to the parent component by the second elongate element may be permanent or non-permanent depending on application requirements. A permanent attachment may be preferred in some embodiments.

### Brief Description of the Drawings

Embodiments of the invention will now be described by way of example with reference to the accompanying drawings in which:
Fig. 1 shows a ducted fan gas turbine engine that may incorporate the invention.
Fig. 2(a) shows an example attachment device for attaching a child component (not shown) to a parent component as viewed in cross section.
Fig. 2(b) shows the example attachment device of Fig. 2(a) as viewed from above (with the parent component removed).
Fig. 3 shows the example attachment device of Fig. 2(a) in use with a parent component and a child component, with all but the attachment device viewed in cross-section.
Fig. 4 shows the attachment device of Fig. 2(a) in which the second elongate element has been omitted for clarity, wherein the attachment device has been modified to include an undercut at a join between the first elongate element and the holder.
Fig. 5 shows an attachment device similar to the attachment device of Fig. 2(a) in which the holder is configured to hold the first elongate element in a manner that allows the first elongate element to move relative to the holder.

### Detailed Description and Further Optional Features of the Invention

In general, the following discussion describes examples of our proposals for non-permanently attaching a child component to a parent component in the context of a gas turbine engine. However, a skilled person would readily appreciate that the described examples could potentially be applicable in any situation in which it is desirable to non-permanently attach a child component to a parent component.

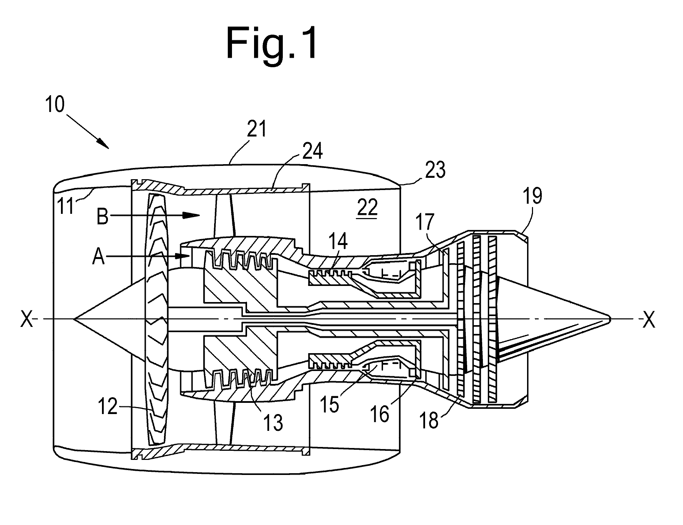

With reference to Fig. 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

In various locations within the gas turbine engine 10, it may be desirable to attach one or more child components to a parent component.

For example, it may be desirable to attach one or more accessories (e.g. one or more pumps, pipework elements, motors, valves, brackets) to a casing of the gas turbine engine, such as the nacelle 21 or an internal casing of the casing of the engine, such as the internal casing 24 shown as being positioned outboard of the fan 12 in Fig. 1. In this scenario, the casing of the gas turbine engine can be considered as the "parent" component and the accessories can be considered as the "child" component.

Herein, the terms "parent" and "child" are intended to be used merely as labels to distinguish a first component from a second component. Thus, the term "parent component" can be used interchangeably with "first component" and the term "child component" can be used interchangeably with "second component".

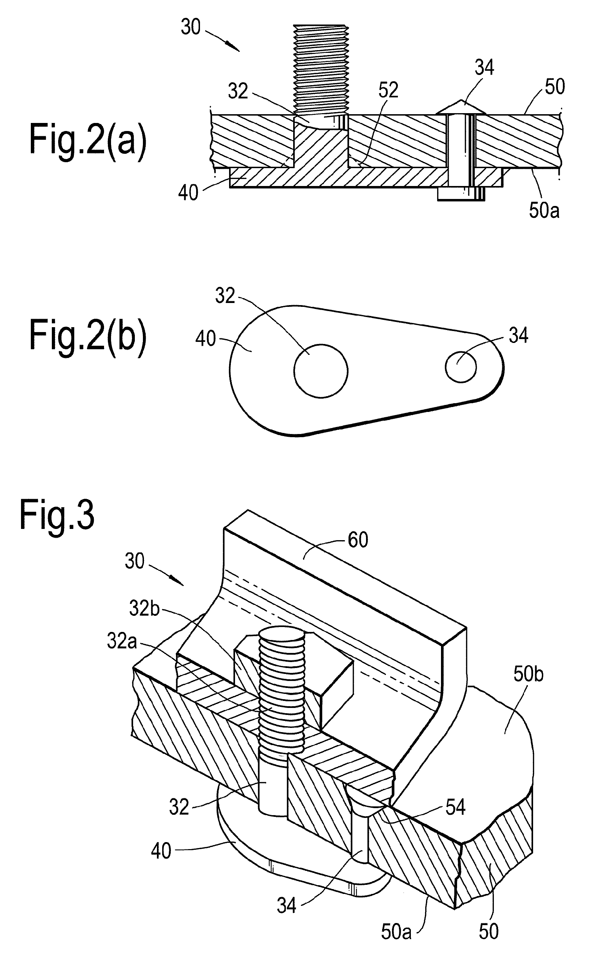

Fig. 2(a) shows an example attachment device 30 for attaching a child component (not shown) to a parent component 50 as viewed in cross section.

Fig. 2(b) shows the example attachment device 30 of Fig. 2(a) as viewed from above (with the parent component 50 removed).

Fig. 3 shows the example attachment device 30 of Fig. 2(a) in use with a parent component 50 and a child component 60, with all but the attachment device 30 viewed in cross-section.

In the particular example shown in Fig. 3, the parent component 50 is a casing of a gas turbine engine and the child component 60 is a bracket.

The attachment device 30 has a first elongate element 32 for non-permanently attaching the child component 60 to the parent component 50, a second elongate element 34, and a holder 40 configured to rest against an installation surface 50a of the parent component 50.

The first elongate element 32 may include a screw thread 32a along at least a portion of its length (see Fig. 3). The first elongate element 32 may be viewed as a "stud" and the attachment device 30 may be viewed as a "stud assembly".

The first elongate element 32 may be permanently attached to the holder 40, e.g. by welding, by co-moulding, or by being integrally formed with the holder (see e.g. Fig. 2(a)).

In general, it would be difficult to machine a perfect 90° corner at the join between the first elongate element 32 and the holder 40, so in practice the parent component 50 may include a chamfer 52 to accommodate the join between the first elongate element 32 and the holder 40.

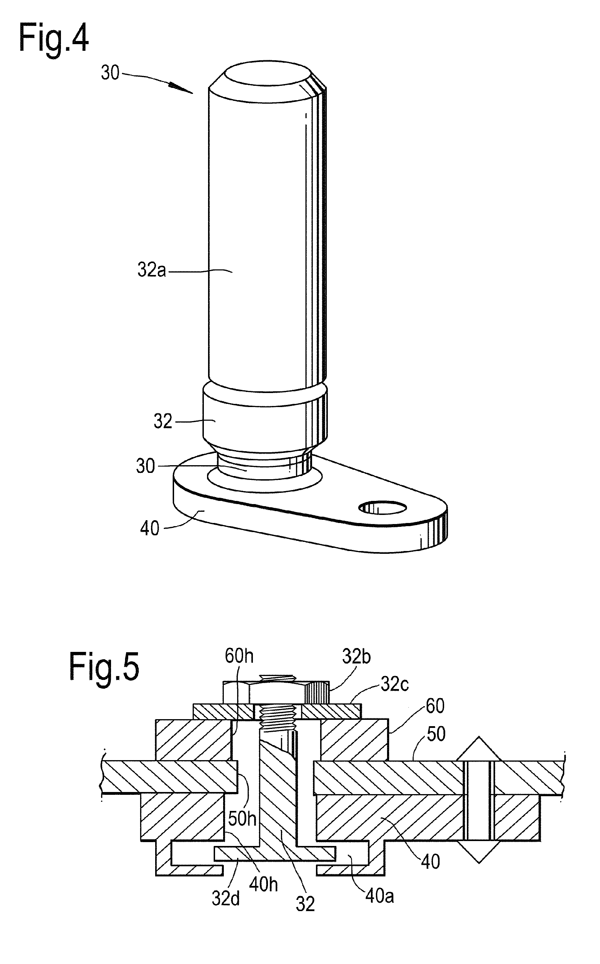

Alternatively, as shown in Fig. 4, the attachment device 30 may include an undercut 33 at a join between the first elongate element 32 and the holder 40, in which case the parent component 50 may not require a chamfer 52 (or a separate washer). This may be useful in instances where machining a chamfer 52 in the installation surface 50a of the parent component is impractical, e.g. due to limited access or added cost.

In some embodiments (not shown), the first elongate element 32 may be non-permanently attached to the holder 40 or provided as a component that is separate from the holder 40.

The second elongate element 34 may be for attaching a holder 40 to the parent component 50, so as to retain the holder 40 in a position in which it rests against an installation surface 50a of the parent component 50.

Because of its preferred role in retaining the holder 40 in a position in which it rests against an installation surface 50a of the parent component 50, the second elongate element 34 may be referred to herein as a "retainer" 34.

In this example, the holder 40 is a plate. The plate may have a tapering shape that reduces in width as it progresses from the first elongate element 32 to the second elongate element 34 (see e.g. Fig. 2(b)). This helps to minimise weight, which can be particularly important e.g. in a gas turbine engine to be used on an aircraft.

In this example, the second elongate element 34 is a rivet, which may be used to permanently attach the holder 40 to the parent component 50. Note that the attachment by the rivet is considered "permanent", because detaching the attachment device 30 from the parent component 50 (e.g. by drilling out the rivet or shearing the head of the rivet) would cause significant or even irreparable damage to the rivet.

However, the second elongate element 34 could equally be a stud or bolt for non-permanently attaching the holder 40 to the parent component 50, e.g. through use of an internal screw thread in a hole in the parent component or through use of a nut. Note that the attachment by the stud or bolt would be considered "non-permanent", because detaching the attachment device 30 from the parent component could be achieved without causing significant damage to the stud or bolt (e.g. by removing a nut).

The second elongate element 34 may be provided as a component that is separate from the holder 40 (prior to assembly).

The parent component 50 and/or the holder 40 may respectively include a countersink so that the second elongate element 34 is flush with a surface of the parent component 50 and/or the holder 40. For example, Fig. 3 shows the parent component 50 as including a countersink 54 so that the second elongate element 34 is flush with a surface 50b of the parent component 50 that is opposite to the installation surface 50a of the parent component 50.

The holder 40 may be configured to rest against an installation surface 50a of the parent component 50 whilst holding the first and second elongate elements 32, 34 in position relative to the installation surface 50a of the parent component 50 such that:
the first elongate element 32 extends, from a first position on the installation surface 50a of the parent component 50, entirely through the parent component 50 and at least partially through (e.g. entirely through) the child component 60 in a manner that permits the first elongate element 32 to be used to non-permanently attach the child 60 component to the parent component 50;
the second elongate element 34 extends, from a second position on the installation surface 50a of the parent component 50 that is different from the first position on the installation surface 50a of the parent component 50, at least partially through (e.g. entirely through) the parent component 50, for example in a manner that permits the second elongate element to be used to attach the holder 40 to the parent component 50.

The parent component 50 may include a hole for the first elongate element 32 at the first position on the installation surface 50a of the parent component 50. The hole at the first position on the installation surface 50a of the parent component 50 may extend entirely through the parent component so as to allow the first elongate element 32 to extend entirely through the parent component 50, e.g. as shown in Fig. 3.

The child component 60 may include a hole for the first elongate element 32, which may extend partially or entirely through the child component 60.

The first elongate element 32 may be configured (e.g. sized) so as not to lockingly engage with (e.g. by interlocking with or friction fitting with) the parent component 50 when it extends through the parent component 50. For example, the first elongate element 32 may be sized so that a screw thread 32a on the first elongate element 32 does not engage with the hole at the first position on the installation surface 50a when it extends through the hole at the first position on the installation surface 50a. For this reason, the hole at the first position on the installation surface 50a of the parent component 50 may not include an internal screw thread.

In some embodiments, the first elongate element 32 may be configured (e.g. sized) so as not to engage with the child component 60 when it extends through the child component 60. This might be appropriate, for example, if the first elongate element 32 is used to non-permanently attach the child component 60 to the parent component 50 by means of a nut 32b (see below).

The parent component 50 may include a hole for the second elongate element 32 at the second position on the installation surface 50a of the parent component 50. The hole at the second position on the installation surface 50a of the parent component 50 may extend partially through the parent component 50 or entirely through the parent component 50 so as to allow the second elongate element 34 to extend at least partially through the parent component 50 (for example entirely through the parent component 50, e.g. as shown in Fig. 3).

In some embodiments, the second elongate element 34 may be configured (e.g. sized) so as not to engage with the parent component 50 when it extends through the parent component 50. This might be appropriate, for example, if the second elongate element 34 is not used to attach the holder 40 to the parent component 50 (e.g. because it is used only to inhibit rotation of the parent component 50 relative to the attachment device 30).

In some embodiments, the second elongate element 34 may be designed to be consumable or disposable. For example, as shown in Fig. 2, the second elongate element 34 could be a plastic stud that can be pressed in place to retain the holder 40 in place. When gripped and removed from the holder side, the plastic stud would normally be damaged during removal and therefore would normally be disposed of. The material used for the plastic stud may be soft enough so as not to cause damage to the parent component 50, but firm enough and strong enough so to secure the holder 40 in place whilst the first elongate element 32 is engaged with the child component 60. This may be of particular use if the method of securing the child component 60 to the first elongate element 32 is a circlip, lockpin, crimpnut or other method that applies little or no torque to the first elongate element 32.

A skilled person would appreciate that there are a variety of arrangements in which the first elongate element could be used to non-permanently attach the child component 60 to the parent component 50.

In an arrangement illustrated in Fig. 3, the first elongate element 32 includes a screw thread 32a along at least a portion of its length, and the first elongate element is used to non-permanently attach the child component 60 to the parent component 50 by screwing a nut 32b onto a portion of the first elongate element 32 that protrudes from the child component 60. In this arrangement, the portion of the first elongate element 32 that protrudes from the child component 60 may have at least a portion of the screw thread 32a on the first elongate element 32, and the nut 32b may have an internal screw thread configured to engage with the screw thread 32a on the protruding portion of the first elongate element 32. Note that the attachment between the child component 60 and the parent component 50 in this arrangement is "non-permanent" since the child component 60 can be detached from the parent component 50 by unscrewing the nut 32b without causing significant damage to the first elongate element 32 or nut 32b.

In an alternative arrangement, which is not illustrated, the first elongate element 32 includes a screw thread 32a along at least a portion of its length, and the first elongate element is used to non-permanently attach the child 60 component to the parent component 50 by screwing the child component 60 onto a portion of the first elongate element 32 that protrudes from the parent component 50. In this arrangement, the portion of the first elongate element 32 that protrudes from the parent component 50 may have at least a portion of the screw thread 32a on the first elongate element 32, and the child component 60 may have an internal screw thread configured to engage with the screw thread 32a on the protruding portion of first elongate element 32. Note that in this arrangement, the first elongate element 32 would not need to extend entirely through the child component 60.

A skilled person would also appreciate that there are a variety of arrangements in which the second elongate element 34 could be used to attach the holder 40 to the parent component 50.

For example, if the second elongate element 34 is a rivet, the second elongate element 34 could be used to attach the holder 40 to the parent component 50 by deforming the rivet, e.g. using a hammer or rivet gun.

For example, if the second elongate element 34 includes a screw thread along at least a portion of its length (not illustrated), the second elongate element 34 could be used to attach the holder 40 to the parent component 50 by screwing a nut onto a portion of the second elongate element 34 that protrudes from the parent component 50. In this arrangement, the portion of the second elongate element 34 that protrudes from the parent component 50 may include at least a portion of the screw thread, and the nut may have an internal screw thread configured to engage with the screw thread on the protruding portion of the second elongate element 34.

Although the second elongate element 34 may be for attaching the holder 40 to the parent component 50, this need not be the case, e.g. since the second elongate element 34 may be used to inhibit rotation of the parent component 50 relative to the attachment device 30 without necessarily providing any attachment function.

The second elongate element 34 and/or the holder 40 may be configured to be weaker than the parent component 50 such that, under a predetermined load between the parent component 50 and the attachment device 30, the second elongate element 34 and/or the holder 40 break (e.g. shear off) before permanent deformation of the parent component 50 occurs. In this way, the second elongate element 34 and/or the holder 40 can be viewed as being "sacrificial" against the parent component 50, and can therefore be seen as providing an "anti-overtorque fuse" function.

Advantages of the example attachment device 30 shown in Figs. 2 and 3 may include:
(i) straight forward removal and replacement of the attachment device 30 with very low risk of damaging the parent component 50 during fitting/replacement of the attachment device 30 (this is especially useful if the child component 60 is to be attached/detached often), thereby potentially reducing cost;
(ii) the attachment device 30 may be employed in situations where the parent component 50 is too thin is or of inappropriate material to accommodate an internal screw thread, or if there is limited access to use a nut and bolt;
(iii) the second elongate element 34 may act as an anti-rotation feature e.g. so as to prevent the parent component 50 from rotating relative to the attachment device 30 (e.g. so that the screw thread on the first elongate element can avoid suffering from wind out during fitment/replacement of a child component 60, without the need for a keying feature);
(iv) the attachment device 30 does not require specialist equipment to install;
(v) the holder 40 may protect the parent component 50 if the second elongate element 34 or the holder 40 require removal/replacement (this contributes to advantage (i), discussed above);
(vi) the holder 40 and second elongate element 34 may act as a load spreader, e.g. to improve resistance to bending loads between the first elongate element 32 and the parent component 50;
(vii) permanent attachment (e.g. by welding, by co-moulding, or by being integrally formed with the holder) of the parent component to the child component can be avoided;
(viii) the second elongate element 34 can be sacrificial against the parent component 50 under excessive force.

Note that the second elongate element 34 is may only be strong enough to attach the holder 40 to the parent component 50, whilst the first elongate element 32 may be used to attach the child component 60 to the parent component 50. The second elongate element may be sacrificial against the parent component 50 (e.g. to take any damage/shear off under excessive force) and may act as an anti-rotation feature, so that a keying feature is not required between the first elongate element and the parent component 50.

The holder plate 40 may be provided with one or more additional secondary elongate elements 34 (not shown), which may be of use e.g. if the hole in the parent component 50 for the first elongate element 32 is designed with a large clearance. In this case, the hole in the parent component 50 for the first elongate element 32 may be located between the two (or more) second elongate elements 34.

As would be appreciated by a skilled person, a number of changes may be made to the attachment device 30 shown in Figs. 2 and 3.

For example, the attachment device 30 may include a seal (e.g. an o-ring or gasket) configured to be located between the holder 40 and the installation surface 50a of the parent component 50 when the holder 40 rests against the installation surface 50a of the parent component 50, e.g. so as to seal a hole in the parent component (e.g. at the first and/or second positions on the installation surface 50a). In this way, leakage of fluid across the parent component 50 may be inhibited/substantially prevented.

For example, although the first elongate element 32 may include a screw thread, this need not be the case. For example, in one arrangement which is not illustrated, the first elongate element 32 is used to non-permanently attach the child component 60 to the parent component 50 by passing a fastener (e.g. a split pin, circlip or a keyring-like device) though a through hole in a portion of the first elongate element 32 that protrudes from the child component 60. In this arrangement, the portion of the first elongate element 32 that protrudes from the child component 60 may have a through hole configured to receive the fastener. Note that the attachment between the child component 60 and the parent component 50 in this arrangement is "non-permanent" since the child component 60 can be detached from the parent component 50 by removing the fastener without causing significant damage to the first elongate element 32 or fastener.

For example, the first elongate element 32 and/or the holder 40 may be mutually shaped with the parent component 50 so as to inhibit/prevent rotation of the attachment device 30 relative to the parent component 50 when the holder 40 rests against the installation surface 50a of the parent component 50 and/or to aid positioning of the attachment device 30 relative to the parent component 50. For example, the base of the first elongate element 32 and/or the holding device 40 could have a shape (e.g. a square shape) that fits into a corresponding recess on the installation surface of the parent component 50 so as to achieve either/both of these functions.

The base of the first elongate element 32 and/or the holding device 40 have a shape that fits into a corresponding recess on the installation surface of the parent component in only a limited number of orientations (e.g. only one orientation) so as to aid positioning of the attachment device 30 relative to the parent component 50, e.g. so as to provide a baulking, "mistake proofing" or "poka-yoke" feature.

For example, the holder could be configured to hold the first elongate element 32 in a manner that allows the first elongate element to move (e.g. "float") relative to the holder 40, e.g. to allow for positional tolerances when using the attachment device 30 or to allow for tolerances between multiple studs. An example of an attachment device in which the holder 40 is configured in this way is shown in Fig. 5.

In the example of Fig. 5, the elongate element 32 may be a stud that includes a screw thread, wherein the first elongate element 32 may be used to non-permanently attach the child component 60 to the parent component 50 by means of a nut 32b, with a washer 32c being located between the nut 32b and the child component 60. The holder 40, the parent component 50 and the child component 60 may have clearance holes 40h, 50h, 60h which are large enough to allow the first elongate element 32 to move (e.g. "float") laterally relative to the holder 40. The first elongate element 32 may include a laterally extending portion 32d and the holder 40 defines a recess in which the laterally extending portion 32d sits, so as to restrict axial movement of the first elongate element 32.

For example, the first elongate element may be provided with a self-locking feature for attaching the attachment device 30 to the parent component 50. This may be useful in the case that the second elongate element only inhibits rotation of the parent component relative to the attachment device and is not for attaching the holder to the parent component. Self-locking features are well-known in the art.

For example, the holder 40 may be a thin plate, e.g. for reduced clearance applications.

For example, the holder 40 may be shaped to conform with the installation surface 50a of the parent component 50. This may help to avoid point or line contact between the holder 40 and parent component 50 which could lead to wear or damage of either/both of these components.

The installation surface 50a of the parent component 50 could, for example, be curved.

For example, the holder 40 may be shaped to fit into a recess in the installation surface of the parent component 50, e.g. so as to be flush with the installation surface 50a of the parent component 50.

For example, the attachment device 30 may have a plurality of second elongate elements 34, e.g. to help improve load spreading by the attachment device 30.

If the attachment device includes a plurality of second elongate elements 34, one (or more) of the second elongate elements 34 could be employed as a "catcher" configured to prevent the attachment device 30 from separating from the parent component 50, e.g. in the event of failure (e.g. caused by shearing) or removal of another one of the second elongate elements 34 (e.g. the other second projecting element 34 could break in its role as an "anti-overtorque fuse" or could be removed for replacement of the attachment device 30). The second elongate element employed as a "catcher" may be flexible, and may include a chord or a wire, for example. This arrangement would mean that if the other second elongate element shears then the child component 60 would be held to the parent component 50 by the first elongate element 32 and the holder 40 would be held to the parent component 50 by the "catcher", i.e. so that none of the components drop off the engine to go somewhere they should not go, e.g. on to a runway and/or to be ingested by this engine or another engine.

For example, the second elongate element 34 could be permanently attached to the holder 40, e.g. by welding, by co-moulding, or by being integrally formed with the holder.

For example, the second elongate element may have a self-locking feature for allowing the second elongate element to attach the attachment device to the parent component 50 from one side, i.e. without access to a side of the parent component 50 opposite the installation surface 50a.

If the second elongate element 34 is used to inhibit rotation of the parent component 50 relative to the attachment device 30 without necessarily providing any attachment function, then the second elongate element 34 may be a plain pin that passes through the parent component 50 and is secured simply with something soft such as an "O" ring rolled over the pin, which would generally be adequate to keep the holder 40 in place whilst the first elongate element 32 secures the child component 60 to the parent component 50.

When used in this specification and claims, the terms "comprises" and "comprising", "including" and variations thereof mean that the specified features, steps or integers are included. The terms are not to be interpreted to exclude the possibility of other features, steps or integers being present.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. An attachment device for non-permanently attaching a child component to a parent component, the attachment device having:
a first elongate element for non-permanently attaching the child component to the parent component;
a second elongate element;
a holder configured to rest against an installation surface of the parent component whilst holding the first and second elongate elements in position relative to the installation surface of the parent component such that:
the first elongate element extends, from a first position on the installation surface of the parent component, entirely through the parent component and at least partially through the child component in a manner that permits the first elongate element to be used to non-permanently attach the child component to the parent component;
the second elongate element extends, from a second position on the installation surface of the parent component that is different from the first position on the installation surface of the parent component, at least partially through the parent component.

2. An attachment device according to claim 1, wherein the second elongate element is for attaching the holder to the parent component so as to retain the holder in a position in which it rests against the installation surface of the parent component.

3. An attachment device according to claim 1 or 2, wherein the first elongate element is configured so as not to lockingly engage with the parent component when it extends through the parent component.

4. An attachment device according to any previous claim, wherein the first elongate element includes a screw thread along at least a portion of its length.

5. An attachment device according to any previous claim, wherein the holder is a plate.

6. An attachment device according to any previous claim, wherein the first elongate element is permanently attached to the holder.

7. An attachment device according to any previous claim, wherein the second elongate element is provided as a component that is separate from the holder.

8. An attachment device according to any previous claim, wherein the second elongate element is a rivet.

9. An attachment device according to any previous claim, wherein the second elongate element and/or the holder is/are configured to be weaker than the parent component such that, under a predetermined load between the parent component and the attachment device, the second elongate element and/or the holder break before permanent deformation of the parent component occurs.

10. An attachment device according to any previous claim, wherein the holder is configured to hold the first elongate element in a manner that allows the first elongate element to move relative to the holder.

11. An apparatus that includes:
a parent component;
a child component;
an attachment device as set out in any of claims 1 to 10;
wherein the holder rests against an installation surface of the parent component whilst holding the first and second elongate elements in position relative to the installation surface of the parent component such that:
the first elongate element extends, from a first position on the installation surface of the parent component, entirely through the parent component and at least partially through the child component;
the second elongate element extends, from a second position on the installation surface of the parent component that is different from the first position on the installation surface of the parent component, at least partially through the parent component;
wherein the first elongate element is used to non-permanently attach the child component to the parent component.

12. An apparatus according to claim 11, wherein the apparatus includes a plurality of attachment devices as set out in any of claims 1 to 10, with the first elongate element of each attachment device being used to non-permanently attach a respective child component to the parent component.

13. An apparatus according to claim 11 or 12, wherein the apparatus is a gas turbine engine or an arrangement of components for use in a gas turbine engine.

14. An apparatus according to claim 13, wherein the parent component is a casing for use in a gas turbine engine and the/each child component could be an accessory for use in a gas turbine engine.

15. A method of using an attachment device as set out in any one of claims 1 to 10, the method including:
resting the holder against an installation surface of a parent component such that:
the first elongate element extends, from a first position on the installation surface of the parent component, entirely through the parent component and at least partially through the child component;
the second elongate element extends, from a second position on the installation surface of the parent component that is different from the first position on the installation surface of the parent component, at least partially through the parent component; and
using the first elongate element to non-permanently attach the child component to the parent component.
